# EUROPÄISCHE PATENTSCHRIFT

(11) **EP 3 443 834 B1**
(45) Veröffentlichungstag und Bekanntmachung des Hinweises auf die Patenterteilung: **05.08.2020**
(21) Anmeldenummer: 18167893.9
(22) Anmeldetag: 18.04.2018
(51) Int. Cl.: A01F 12/28

(54) **MÄHDRESCHER MIT EINER DRESCHVORRICHTUNG**
COMBINE HARVESTER WITH A THRESHING DEVICE
MOISSONNEUSE-BATTEUSE DOTÉE D'UN DISPOSITIF DE BATTAGE

(30) Priorität: 17.08.2017 DE 102017118759
(43) Veröffentlichungstag der Anmeldung: 20.02.2019
(73) Patentinhaber: CLAAS Selbstfahrende Erntemaschinen GmbH, 33428 Harsewinkel (DE)
(72) Erfinder: Schlichting, Dirk, 33100 Paderborn (DE); Strieker, Norbert, 33415 Verl (DE); Hornberg, Oliver, 33617 Bielefeld (DE)
(74) Vertreter: CLAAS Gruppe

(56) Entgegenhaltungen:
- EP-A1- 3 023 001
- EP-A2- 2 752 108
- DE-U- 7 016 014
- US-A- 4 222 395

## Beschreibung

Die vorliegende Erfindung betrifft einen Mähdrescher mit einer Dreschvorrichtung, umfassend zumindest eine Dreschtrommel sowie zumindest einen die Dreschtrommel abschnittsweise umgebenden Dreschkorb, der zur Mantelfläche der zumindest einen Dreschtrommel mittels einer Dreschkorbverstellvorrichtung abstandsveränderlich positionierbar ist, sowie mit einer Arbeitshydraulik zum Betreiben zumindest der Dreschvorrichtung, wobei die Dreschkorbverstellvorrichtung mittels zumindest eines doppeltwirkenden Hydraulikzylinders betätigbar ist, und der zumindest eine Hydraulikzylinder zur Einstellung eines Abstands des Dreschkorbes zur Dreschtrommel kolbenseitig und ringseitig mit einem Hydraulikdruck beaufschlagbar ist.

Aus der DE 70 16 014 U1 ist ein Mähdrescher mit einer Dreschvorrichtung der eingangs genannten Art bekannt. Die Dreschvorrichtung weist eine Dreschtrommel und einen diese abschnittsweise umgebenden Dreschkorb auf. Der Dreschkorb ist mittels einer Hebelanordnung, die von einer Kolbenstange eines doppeltwirkenden Hydraulikzylinders betätigt wird, zur Dreschtrommel abstandsveränderlich positionierbar. Der Hydraulikzylinder wird durch ein 3/2-Wegeventil gesteuert, welches eine Zuführstellung, eine neutrale Stellung und eine Entleerungsstellung einnehmen kann. In der Zuführstellung wird dem Hydraulikzylinder ein hydraulisches Druckmittel von einer Hydraulikpumpe zum Ausfahren der Kolbenstange zugeführt. In der neutralen Stellung werden das Zuführen zum Stößel sowie das Abführen des hydraulischen Druckmittels vom Stößel unterbunden, sodass der Dreschkorb seinen Abstand zur Dreschtrommel nicht verändert. Die Hydraulikpumpe wird mittels eines Antriebsaggregates des Mähdreschers angetrieben. In der Entleerungsstellung ist der Hydraulikzylinder mit einem Tank verbunden, um die Kolbenstange einzufahren. Die Betätigung des 3/2-Wegeventils erfolgt manuell durch eine Bedienperson. Hierzu umfasst das 3/2-Wegeventil eine Betätigungsstange, die durch einen Gelenkbolzen mit einem schwimmend gelagerten Hebel verbunden ist, dessen eines Ende durch einen Bolzen gelenkig mit einem Hebel der Hebelanordnung verbunden ist, und dessen anderes Ende durch einen Bowdenzug mit einem Betätigungshebel in einer Kabine des Mähdreschers verbunden ist. Mit dem Abschalten des Antriebsaggregates des Mähdreschers wird auch die Hydraulikpumpe abgeschaltet, so dass kein hydraulisches Druckmittel gefördert wird. Um den Dreschkorb in einer definierten Position zu halten, ist erforderlich, vor dem Abschalten des Mähdreschers der Betätigungshebel in eine Schaltstellung zu überführen, in der das 3/2-Wegeventil eine neutrale Stellung einnimmt.

Vor diesem Hintergrund ist es die Aufgabe der vorliegenden Erfindung, einen Mähdrescher der eingangs genannten Art derart weiterzubilden, dass der Dreschkorb bei Abschaltung eines Antriebsaggregates des Mähdreschers, und mit diesem seiner Arbeitshydraulik, automatisch in seiner zuletzt eingenommenen Position gehalten wird.

Diese Aufgabe wird erfahrungsgemäß durch die Merkmale des Anspruchs 1 gelöst.

Vorteilhafte Weiterbildungen sind Gegenstand der Unteransprüche.

Gemäß dem Anspruch 1 wird ein Mähdrescher mit einer Dreschvorrichtung vorgeschlagen, umfassend zumindest eine Dreschtrommel sowie einen diese abschnittsweise umgebenden Dreschkorb, der zur Mantelfläche der Dreschtrommel mittels einer Dreschkorbverstellvorrichtung abstandsveränderlich positionierbar ist, sowie mit einer Arbeitshydraulik zum Betreiben zumindest der Dreschvorrichtung, hierzu ist die Dreschkorbverstellvorrichtung mittels zumindest eines doppeltwirkenden Hydraulikzylinders betätigbar, indem der zumindest eine Hydraulikzylinder zur Einstellung eines Abstands des Dreschkorbes zu der Mantelfläche der Dreschtrommel kolbenseitig sowie ringseitig mit einem Hydraulikdruck beaufschlagbar ist. Üblicherweise wird der zumindest eine Hydraulikzylinder kolbenseitig mit Druck beaufschlagt, um den Abstand des Dreschkorbes zur Mantelfläche der Dreschtrommel einzustellen und aufrechtzuerhalten. Die Einstellung des Abstands des Dreschkorbes kann manuell oder automatisch erfolgen. Um den Dreschkorb bei Abschaltung eines Antriebsaggregates respektive der von diesem angetriebenen Arbeitshydraulik des Mähdreschers automatisch in seiner zuletzt eingenommenen Position zu halten, ist vorgesehen, dass durch die Abschaltung der Arbeitshydraulik ein Schaltventil ansteuerbar ist, so dass ein Mindestdruck bestehen bleibt, um den Hydraulikzylinder in seiner zuletzt eingestellten Position zu halten. Die Ansteuerung des Schaltventils bewirkt also die Aufrechterhaltung eines, insbesondere ringseitigen, Mindestdrucks, der größer ist als die Gewichtskraft des Dreschkorbes und darin befindlicher Komponenten. Auf diese Weise wird der Hydraulikzylinder in seiner zuletzt eingestellten Position gehalten, da der aufrechterhaltene Mindestdruck der Gewichtskraft des Dreschkorbes entgegenwirkt. Durch die Abschaltung der Arbeitshydraulik, insbesondere einer der Versorgung dienenden Hydraulikpumpe, wird das Schaltventil automatisch in eine Schaltstellung überführt, in der ein Abfließen des Druckmittels aus dem Hydraulikzylinder auf der Seite, je nach Einbausituation der Kolben- oder Ringseite, verhindert wird, zu welcher ein Öffnen des Dreschkorbes erfolgt. Hierdurch wird ein Absacken, im Sinne einer Abstandsvergrößerung zur Mantelfläche der Dreschtrommel, des Dreschkorbes verhindert. Der Dreschkorb wird in seiner aktuellen Position gehalten. Dies ermöglicht auf einfache und kostengünstige Weise eine Überprüfung oder mechanische Justierung der Korbverstellung im Wartungsfall. Insbesondere bedarf es keiner zusätzlichen Hilfsmittel, um den Dreschkorb in seiner letzten Position zu halten.

Dabei ist es vorteilhaft, dass die Arbeitshydraulik als Konstantdrucksystem ausgebildet ist. Das Konstantdrucksystem verfügt über eine Hydraulikpumpe, die den Arbeitsdruck im Konstantdrucksystem bereitstellt und aufrechterhält. Die Hydraulikpumpe wird von dem Antriebsaggregat angetrieben. Hierzu kann die Hydraulikpumpe als Axialkolbenmaschine ausgeführt sein. Mit der Abschaltung des Antriebsaggregates kommt es aufgrund der Abschaltung der Hydraulikpumpe zu einem sofortigen Druckabfall in dem Konstantdrucksystem. Dieser Druckabfall führt dazu, dass das Schaltventil seine Schaltstellung von offen in geschlossen ändert. Dadurch wird das Abfließen des Druckmittels aus dem Hydraulikzylinder unterbunden. Die Dreschkorbverstellvorrichtung wird in ihrer letzten Position lagefixiert, das heißt der Dreschkorb behält seine zuletzt eingenommene Arbeitsposition bei. Es bedarf dabei keiner zusätzlichen Energieversorgung, um das Schaltventil in seine Sperrstellung zu überführen.

Insbesondere kann das Schaltventil als 2/2-Wege-Sitzventil ausgebildet sein. Dabei kann das Schaltventil in der Weise ausgebildet sein, dass es in zwei Flussrichtungen öffnen kann, d. h. sowohl bei Beaufschlagung der Kolbenseite mit einem ersten Hydraulikdruck als auch der Ringseite des Hydraulikzylinders mit einem zweiten Hydraulikdruck. Dadurch ist gewährleistet, dass je nach Bewegungsrichtung des Dreschkorbes das Schaltventil in seiner geöffneten Position gehalten wird, sofern ein Hydraulikdruck des Konstantdrucksystems anliegt. Dies ist vor allem dann von Bedeutung, wenn es zwischen der Dreschtrommel und dem Dreschkorb durch einen Erntegutstau zu einer Überlastung kommt. Hierdurch wird auf den Dreschkorb eine Kraft ausgeübt, welche durch die Dreschkorbverstellvorrichtung auf den zumindest einen Hydraulikzylinder übertragen wird. Der dabei auftretende Druck kann den Arbeitsdruck des Konstantdrucksystems überschreiten.

Bevorzugt kann das Schaltventil einen ersten Steueranschluss und einen zweiten Steueranschluss aufweisen, durch die das Schaltventil ansteuerbar ist, um es in eine Schaltstellung zu überführen, in der das Schaltventil öffnet, unabhängig davon, welcher der beiden Steueranschluss angesteuert wird.

Insbesondere kann das Schaltventil hydraulisch ansteuerbar sein. Dies hat gegenüber einem elektrisch angesteuerten Schaltventil den Vorteil, dass es kostengünstiger ist und eine geringere Komplexität aufweist.

Gemäß einer vorteilhaften Weiterbildung ist vorgesehen, dass das Schaltventil einen mit einer Federkraft beaufschlagten Schieber aufweist, welcher leckölfrei abgedichtet ist.

Insbesondere können in Abhängigkeit von der Federkraft sowie der Ausgestaltung von Ventilsitz und Ringfläche unterschiedliche Öffnungsdrücke einstellbar sein. Dadurch lässt sich ein Steuerdruck einstellen, der an einem der beiden Steueranschlüsse vorliegen muss, um das Schaltventil in seine geöffnete Schaltstellung zu überführen und zu halten.

Weiterhin kann der zumindest eine Hydraulikzylinder zur Einstellung und zum Halten der eingestellten Position der Dreschkorbverstellvorrichtung durch Ansteuerung eines 3/2-Wegeventils und eines 2/2-Wegeventils verstellbar sein. Dabei erfolgt zum Ausfahren des Hydraulikzylinders eine Betätigung sowohl des 3/2-Wegeventils als auch des 2/2-Wegeventils, während zum Einfahren oder Halten lediglich das 2/2-Wegeventil betätigt wird.

Vorteilhaft ist es, dass das Schaltventil bei an einem der Steueranschlüsse anstehendem Hydraulikdruck eine Überlastabsicherung freigibt. Die Überlastabsicherung wird durch das sich in geöffneter Schaltstellung befindliche Schaltventil dargestellt. Das Ansteigen des kolbenseitigen Drucks infolge einer Überlastung im Dreschkorb bewirkt auf der Ringseite ein Einfedern der Kolbenstange, so dass der zumindest eine Hydraulikzylinder temporär den Dreschkorb öffnet. Auf der Kolbenseite wird, da sich das 3/2-Wegeventil und das 2/2-Wegeventil zum Halten der Position der Dreschkorbverstellvorrichtung in gesperrter Stellung befinden, temporär ein Vakuum erzeugt, welches nach dem Überwinden der Überlast zu einer Rückführung der Kolbenstange in ihre eingestellte Position führt.

Die vorliegende Erfindung wird nachstehend anhand eines in den Zeichnungen dargestellten Ausführungsbeispieles näher erläutert.

Es zeigen:
- Fig. 1: eine schematische Darstellung eines Dreschwerks mit verstellbarem Dreschkorb eines Mähdreschers in Seitenansicht;
- Fig. 2: eine Schnittansicht eines Schaltventils;
- Fig. 3: einen Schaltplan eines Teilabschnitts eines Hydraulikkreises für eine Dreschkorbverstellung.

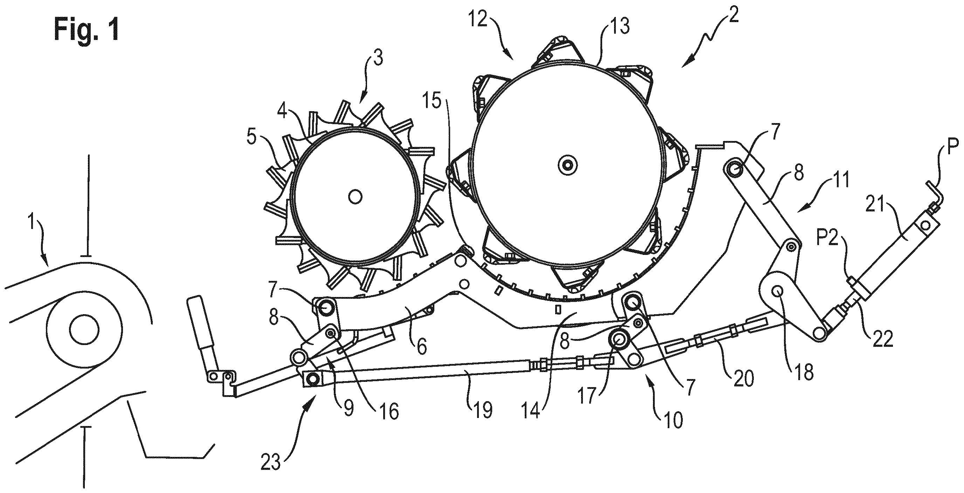

In der Figur 1 ist mit 1 ein Schrägförderer bezeichnet, an den sich eine mehrere Dreschtrommeln umfassende Dreschvorrichtung 2 eines nicht näher dargestellten Mähdreschers anschließt. Die Dreschvorrichtung 2 besteht im Wesentlichen aus einer ersten Dreschtrommel 3, der Vorbeschleunigungstrommel, mit einem geschlossenen Zylindermantel 4, auf den verteilt Mitnehmer 5 aufgesetzt sind sowie einer zweiten Dreschtrommel 12, die auf ihrer Mantelfläche 13, bei geschlossener Ausführung, über ihren Umfang verteilt angeordnete Schlagleisten 15 aufweist.

Eine dritte, als Wendetrommel bzw. Zuführtrommel ausgeführte Dreschtrommel der Dreschvorrichtung 2 ist nicht dargestellt. Der ersten Dreschtrommel 3 ist ein erster Dreschkorb 6, zugeordnet. Der zweiten Dreschtrommel 12 ist ein zweiter Dreschkorb 14 zugeordnet. Im Übergangsbereich zwischen der ersten Dreschtrommel 3 und der zweiten Dreschtrommel 12 ist eine so genannte Entgrannereinrichtung angeordnet, die bei Bedarf in den Erntegutfluss einschwenkbar ist, um eine aggressivere Dreschwirkung zu erzielen. Der erste Dreschkorb 6 und der zweite Dreschkorb 14 sind durch eine Dreschkorbverstellvorrichtung 23 gegenüber der jeweiligen Mantelfläche der ersten Dreschtrommel 3 und der zweiten Dreschtrommel 12 abstandsveränderlich positionierbar. Der erste und der zweite Dreschkorb 6, 14 sind mit Schwenkachsen 7 versehen, auf welche Laschen 8 aufgesetzt sind. Die jeweilige Lasche 8 ist gelenkig mit einem Winkelhebel 9, 10 bzw. 11 verbunden. Der jeweilige Winkelhebel 9, 10 und 11 ist um eine feste Achsen 16, 17 bzw. 18 schwenkbar, wobei die den Laschen 8 abgewandten Schenkel der Winkelhebel 9, 10 und 11 miteinander durch eine Koppel 19 bzw. 20 verbunden sind.

Ein Schenkel des Winkelhebels 11 weist eine Verlängerung 21 auf, an die eine Kolbenstange 22 zumindest eines doppeltwirkenden Hydraulikzylinders 21 angreift. Zumindest die Winkelhebel 9, 10, 11, die jeweilige Koppel 19, 20 sowie der zumindest eine doppeltwirkende Hydraulikzylinder 21 sind Teil der Dreschkorbverstellvorrichtung 23. Durch Betätigung des zumindest einen Hydraulikzylinders 21 werden die beiden Dreschkörbe 6, 14 verstellt, wodurch sich ihr Abstand zur Mantelfläche der Dreschtrommel 3 bzw. der Dreschtrommel 12 verändert. Der zumindest eine Hydraulikzylinder 21 wird mittels einer als Konstantdrucksystem ausgebildeten Arbeitshydraulik des Mähdreschers mit einem Hydraulikdruck beaufschlagt, um die Dreschkorbverstellvorrichtung 23 zu betätigen. Das Bewegen der Dreschkörbe 6, 14 in Richtung der jeweiligen Dreschtrommeln 3, 12 durch das Einfahren der Kolbenstange 22 wird als Schließen bezeichnet. Hingegen wird das Bewegen der Dreschkörbe 6, 14 in von der jeweiligen Dreschtrommeln 3, 12 abgewandter Richtung durch das Ausfahren der Kolbenstange 22 als Öffnen bezeichnet.

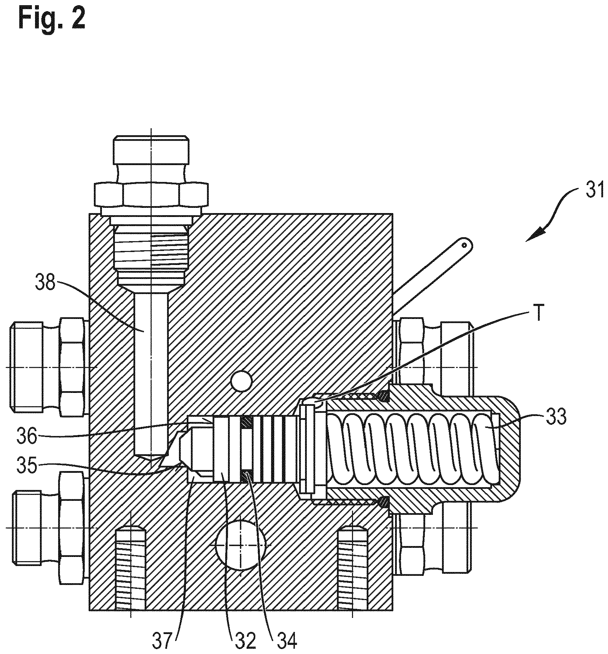

Die Darstellung in Fig. 2 zeigt eine Schnittansicht eines Schaltventils 31. Das Schaltventil 31 ist als ein 2/2-Wegesitzventil ausgeführt und in seiner Grundstellung dargestellt, in welcher das Schaltventil 31 sperrt. Das Schaltventil 31 umfasst einen Schieber 32, der von einer Druckfeder 33 mit einer Druckkraft beaufschlagt wird, um das Schaltventil 31 in der dargestellten Grundstellung zu halten. Der Schieber 32 wird dazu von der Druckfeder 33 gegen den Ventilsitz 35 gepresst. Der Schieber 32 weist eine mit einem hydraulischen Druck beaufschlagbare Ringfläche 36 sowie eine Dichtung 34 auf. Durch die Dichtung 34 ist der Schieber 32 leckölfrei zum Tank T abgedichtet. Das Schaltventil 31 öffnet, wenn ein erster Steuerdruck 37 oder ein zweiter Steuerdruck 38 anliegen.

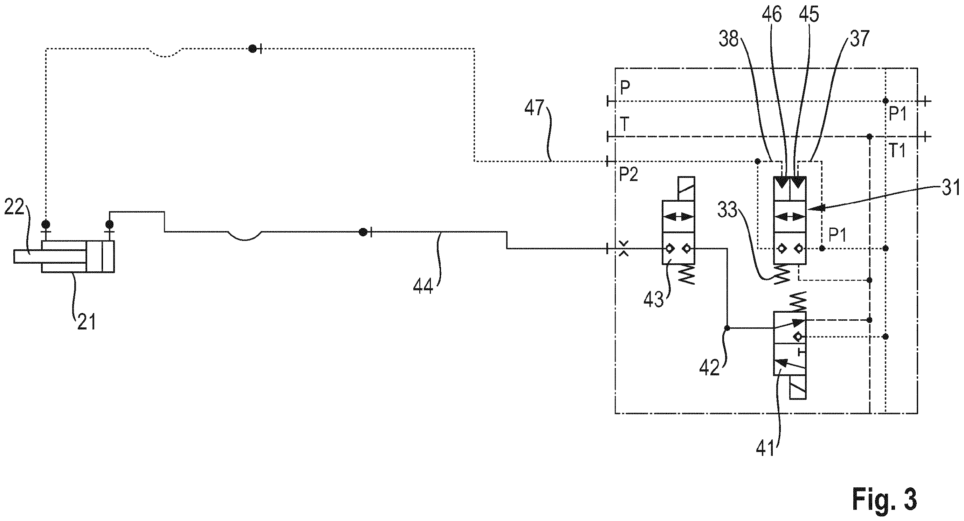

In Fig. 3 ist ein Schaltplan eines Teilabschnitts eines Hydraulikkreises der Arbeitshydraulik des Mähdreschers für die Dreschkorbverstellung 23 dargestellt. Die als Konstantdrucksystem ausgebildete Arbeitshydraulik stellt mittels einer Hydraulikpumpe, die von einem Verbrennungsmotor des Mähdreschers angetrieben wird, und zumindest eines Speichers einen konstanten Hydraulikdruck P bereit, welcher unter anderem zur Ansteuerung und Betätigung der Dreschkorbverstellung 23 verwendet wird. Der Hydraulikkreis 40 umfasst ein elektrisch betätigtes 3/2-Wegeventil 41 und ein diesem nachgeordnetes 2/2-Wegeventil 43, welche durch eine Hydraulikleitung 42 miteinander verbunden sind, sowie das Schaltventil 31, welches durch eine Hydraulikleitung 47 mit der Ringseite des Hydraulikzylinders 21 fluidleitend verbunden ist.

Mittels des 3/2-Wegeventils 41 und des 2/2-Wegeventils 43 ist der zumindest eine Hydraulikzylinder 21 der Dreschkorbverstellvorrichtung 23 kolbenseitig mit dem Hydraulikdruck P beaufschlagbar. Hierzu ist das 2/2-Wegeventils 43 durch eine Zuleitung 44 mit der Kolbenseite des doppeltwirkenden Hydraulikzylinders 21 fluidleitend verbunden. Das Schaltventil 31, welches bei Abschaltung des Verbrennungsmotors und dem damit verbundenen Einbruch des Hydraulikdrucks P des Konstantdrucksystems, dient, ist durch eine Zuleitung mit dem Hydraulikzylinder 21 fluidleitend verbunden. Die Darstellung in Fig. 3 zeigt das 3/2-Wegeventile 41, das 2/2-Wegeventil 43 sowie das Schaltventil 31 jeweils in einer Grundstellung, welche diese durch eine Beaufschlagung durch eine Druckfeder einnehmen.

Das 3/2-Wegeventil 41 ist durch seinen einen Anschluss mit einer zu einem Tank T führenden Hydraulikleitung TL sowie durch seinen anderen Anschluss mit einer Hydraulikleitung PL verbunden, in welcher der Hydraulikdruck P herrscht. In der dargestellten Grundstellung des 3/2-Wegeventils 41 ist die Hydraulikleitung 42 mit der Tankleitung TL verbunden. Das Schaltventil 31 sperrt in seiner gezeigten Grundstellung den Fluss von Hydrauliköl von oder zu der Ringseite des Hydraulikzylinders 21. Das 2/2-Wegeventil 43 sperrt in seiner gezeigten Grundstellung den Fluss von Hydrauliköl von oder zu der Kolbenseite des Hydraulikzylinders 21. Im laufenden Betrieb des Mähdreschers stellt die Hydraulikpumpe 41 des Konstantdrucksystems das Hydrauliköl mit konstantem Hydraulikdruck P bereit. Dieser Hydraulikdruck P bildet den ersten Steuerdruck 37, der an einem ersten Steueranschluss 45 des Schaltventils 31 ansteht, wodurch dieses in eine geöffnete Stellung überführt wird. In geöffneter Stellung des Schaltventils 31 sind die Zuleitung 47 und die Hydraulikleitung PL miteinander verbunden sind. An einem zweiten Steueranschluss 46 steht ein Hydraulikdruck P2 als zweiter Steuerdruck 38 an, welcher auf der Ringseite des Hydraulikzylinders 21 herrscht. Das Schaltventil 31 öffnet unabhängig davon, welcher der beiden Steueranschlüsse 45 oder 46 angesteuert wird. Das heißt, dass das Steuerventil 31 in beiden Flussrichtungen öffnet, unabhängig davon welcher der Hydraulikdrücke P2 oder P betriebsbedingt höher ist. Das Schaltventil 31 lässt in Abhängigkeit von der Dimensionierung der Druckfeder 33, des Ventilsitzes 35 und der Ringfläche 36 unterschiedliche Öffnungsdrücke zu.

Für das Öffnen des oder der Dreschkörbe 6, 14 wird der zumindest eine Hydraulikzylinder 21 kolbenseitig mit dem Hydraulikdruck P beaufschlagt, um den Abstand zwischen der Mantelfläche der Dreschtrommeln 3, 12 und den Dreschkörben 6, 14 zu vergrößern. Hierzu werden das 3/2-Wegeventil 41 und das diesem nachgeordnete 2/2-Wegeventiel 43 elektrisch angesteuert, so dass die Verbindung zwischen den Hydraulikleitungen 42, 44 und der Druckleitung PL hergestellt ist. Das kolbenringseitige Hydrauliköl wird entsprechend verdrängt und fließt über das geöffnete Schaltventil 31 in einen Speicher des Konstantdrucksystems ab.

Zum Halten der Dreschkörbe 6, 14 während des laufenden Betriebs des Mähdreschers werden das 3/2-Wegeventil 41 und das 2/2-Wegeventil 43 nach erfolgter Einstellung des Abstandes zwischen der Mantelfläche der Dreschtrommeln 3, 12 und den Dreschkörben 6, 14 durch Ansteuerung über ihren jeweiligen Steueranschluss in ihre Grundstellung überführt. Das Schaltventil 31 ist aufgrund zumindest eines anstehenden Steuerdruckes 37 oder 38 weiterhin in geöffneter Stellung. Tritt eine Überlastsituation an einem Dreschkorb 6, 14 auf, so wird die Kolbenstange 22 temporär ausgefahren, um den Abstand zwischen Dreschkorb 6, 14 und der Mantelfläche der Dreschtrommel 5, 12 zu vergrößern. Der ringseitige Hydraulikdruck P2 wirkt dabei als Feder. Auf der Kolbenseite tritt zugleich ein Vakuum auf, welches nach dem Überwinden der Überlastsituation ein Einziehen der Kolbenstange 22 bewirkt, so dass die Dreschkörbe 6, 14 wieder ihre mittels der Dreschkorbverstellvorrichtung 23 eingestellten Positionen einnehmen.

Zum Schließen der Dreschkörbe 6, 14 wird der zumindest eine Hydraulikzylinder 21 kolbenringseitig mit dem Hydraulikdruck P durch das Schaltventil 31 beaufschlagt. Aufgrund des anstehenden Steuerdrucks 37, 38 an dem Schaltventil 31 bleibt dieses geöffnet. Das 3/2-Wegeventile 41 und das 2/2-Wegeventil 43 werden zum Schließen der Dreschkörbe 6, 14 in der Weise angesteuert, dass diese Öffnen, so dass das Hydrauliköl kolbenseitig verdrängt werden kann.

Das Abschalten des Mähdreschers führt dazu, dass die als Konstantdrucksystem ausgeführte Arbeitshydraulik keinen Hydraulikdruck P bereitstellt. Das 3/2-Wegeventile 41 und das 2/2-Wegeventil 43 werden in ihre Grundstellung überführt. Der Fortfall der Steuerdrücke 37, 38 an dem Schaltventil 31 führt dazu, dass das Schaltventil 31 durch die Druckfeder 33 automatisch in seine Grundstellung überführt wird, in welcher das Schaltventil 31 sperrt. Ein ringseitiger Mindestdruck im Hydraulikzylinder 21 bleibt dadurch aufrechterhalten, da ein Abfließen des Hydrauliköls durch das Sperren des Schaltventils 31 verhindert wird. Dadurch wird auf einfache Weise vermieden, dass die Dreschkörbe 6, 14 aufgrund ihres Eigengewichts und des fehlenden Arbeitsdruckes zum Betreiben der Dreschkorbverstellvorrichtung 23 absinken können. Somit werden die Dreschkörbe 6, 14 in einer zuletzt durch das 3/2-Wegeventil eingestellten Position gehalten, wodurch eine Überprüfung oder mechanische Justierung der Dreschkorbverstellvorrichtung 23 im Wartungsfall ohne weiteres möglich ist.

Eine Verwendung des zumindest einen Hydraulikzylinders 21 bei umgekehrter Anordnung von Kolben- und Ringseite ist selbstverständlich auch möglich.

**Bezugszeichenliste**

| | | | |
|---|---|---|---|
| 1 | Schrägförderer | 37 | Erster Steuerdruck |
| 2 | Dreschvorrichtung | 38 | Zweiter Steuerdruck |
| 3 | Dreschtrommel | | |
| 4 | Zylindermantel | | |
| 5 | Mitnehmer | 41 | 3/2-Wegeventil |
| 6 | Dreschkorb | 42 | Hydraulikleitung |
| 7 | Schwenkachse | 43 | 2/2-Wegeventil |
| 8 | Lasche | 44 | Hydraulikleitung |
| 9 | Winkelhebel | 45 | Erster Steueranschluss |
| 10 | Winkelhebel | 46 | Zweiter Steueranschluss |
| 11 | Winkelhebel | 47 | Hydraulikleitung |
| 12 | Dreschtrommel | | |
| 13 | Mantelfläche | P | Hydraulikdruck |
| 14 | Dreschkorb | P2 | Hydraulikdruck |
| 15 | Schlagleiste | PL | Druckleitung |
| 16 | Achse | TL | Tankleitung |
| 17 | Achse | | |
| 18 | Achse | | |
| 19 | Koppel | | |
| 20 | Koppel | | |
| 21 | Hydraulikzylinder | | |
| 22 | Kolbenstange | | |
| 23 | Dreschkorbverstellvorrichtung | | |
| 31 | Schaltventil | | |
| 32 | Schieber | | |
| 33 | Druckfeder | | |
| 34 | Dichtung | | |
| 35 | Ventilsitz | | |
| 36 | Ringfläche | | |

## Patentansprüche

1. Mähdrescher mit einer Dreschvorrichtung (2), umfassend zumindest eine Dreschtrommel (3, 12) sowie einen diese abschnittsweise umgebenden Dreschkorb (6, 14), der derart ausgestaltet ist, dass der Dreschkorb (6, 14) zur Mantelfläche (4, 13) der Dreschtrommel (3, 12) mittels einer hydraulisch betätigten Dreschkorbverstellvorrichtung (23) abstandsveränderlich positioniert wird, sowie mit einer Arbeitshydraulik zum Betreiben der Dreschvorrichtung (2), wobei
- die Dreschkorbverstellvorrichtung (23) derart eingerichtet ist, dass die Dreschkorbverstellvorrichtung (23) mittels zumindest eines doppeltwirkenden Hydraulikzylinders (21) betätigt wird, und
- der zumindest eine Hydraulikzylinder (21) derart ausgestaltet ist, dass der Hydraulikzylinder (21) zur Einstellung eines Abstands des Dreschkorbes (6, 14) zu der Mantelfläche (4, 13) der Dreschtrommel (3, 12) kolbenseitig sowie ringseitig mit einem Hydraulikdruck (P, P2) beaufschlagt wird,
**dadurch gekennzeichnet, dass** durch die Abschaltung der Arbeitshydraulik ein Schaltventil (31) derart angesteuert wird, dass ein Mindestdruck (P2) bestehen bleibt, um den zumindest einen Hydraulikzylinder (21) in seiner zuletzt eingestellten Position zu halten.

2. Mähdrescher nach Anspruch 1, **dadurch gekennzeichnet, dass** die Arbeitshydraulik als Konstantdrucksystem ausgebildet ist.

3. Mähdrescher nach Anspruch 1 oder 2, **dadurch gekennzeichnet, dass** das Schaltventil (31) als 2/2-Wege-Sitzventil ausgebildet ist.

4. Mähdrescher nach einem der Ansprüche 1 bis 3, **dadurch gekennzeichnet, dass** das Schaltventil (31) einen ersten Steueranschluss (45) und einen zweiten Steueranschluss (46) aufweist, durch die das Schaltventil (31) ansteuerbar ist, um zu öffnen, unabhängig davon, welcher Steueranschluss (45, 46) angesteuert wird.

5. Mähdrescher nach Anspruch 4, **dadurch gekennzeichnet, dass** das Schaltventil (31) hydraulisch ansteuerbar ist.

6. Mähdrescher nach einem der vorangehenden Ansprüche, **dadurch gekennzeichnet, dass** das Schaltventil (31) einen mit einer Federkraft beaufschlagten Schieber (32) aufweist, welcher leckölfrei abgedichtet ist.

7. Mähdrescher nach Anspruch 6, **dadurch gekennzeichnet, dass** in Abhängigkeit von der Federkraft sowie der Ausgestaltung von Ventilsitz (35) und Ringfläche (36) unterschiedliche Öffnungsdrücke einstellbar sind.

8. Mähdrescher nach einem der vorangehenden Ansprüche, **dadurch gekennzeichnet, dass** der zumindest eine Hydraulikzylinder (21) zur Einstellung und zum Halten der eingestellten Position der Dreschkorbverstellvorrichtung (23) durch Ansteuerung eines 3/2-Wegeventil (41) und eines 2/2-Wegeventils (43) verstellbar ist.

9. Mähdrescher nach einem der vorangehenden Ansprüche, **dadurch gekennzeichnet, dass** das Schaltventil (31) bei anstehendem Hydraulikdruck (P) eine Überlastabsicherung freigibt.

10. Mähdrescher nach einem der vorangehenden Ansprüche, **dadurch gekennzeichnet, dass** der zumindest eine Hydraulikzylinder (21) kolbenseitig mit einem von einer Hydraulikpumpe der Arbeitshydraulik bereitgestellten Hydraulikdruck (P) beaufschlagbar ist.

## Claims

1. A combine harvester having a threshing apparatus (2) including at least a threshing drum (3, 12) and a threshing concave (6, 14) which surrounds it portion-wise and which is of such a configuration that the threshing concave (6, 14) is positioned in variably spaced relationship with the peripheral surface (4, 13) of the threshing drum (3, 12) by means of a hydraulically actuated threshing concave adjustment device (23), and having a hydraulic operating system for operating the threshing apparatus (2), wherein
- the threshing concave adjustment device (23) is so adapted that the threshing concave adjustment device (23) is actuated by means of at least one double-acting hydraulic cylinder (21), and
- the at least one hydraulic cylinder (21) is so designed that the hydraulic cylinder (21) for adjusting a spacing of the threshing concave (6, 14) relative to the peripheral surface (4, 13) of the threshing drum (3, 12) is acted upon at the piston side and the ring side with a hydraulic pressure (P, P2),
**characterised in that** a switching valve (31) is actuated by shutdown of the hydraulic operating system in such a way that a minimum pressure (P2) is maintained to hold the at least one hydraulic cylinder (21) in its last-set position.

2. A combine harvester according to claim 1 **characterised in that** the hydraulic operating system is in the form of a constant pressure system.

3. A combine harvester according to claim 1 or claim 2 **characterised in that** the switching valve (31) is in the form of a 2/2 way seat valve.

4. A combine harvester according to one of claims 1 to 3 **characterised in that** the switching valve (31) has a first control connection (45) and a second control connection (46), by which the switching valve (31) is actuable to open irrespective of which control connection (45, 46) is actuated.

5. A combine harvester according to claim 4 **characterised in that** the switching valve (31) is hydraulically actuable.

6. A combine harvester according to one of the preceding claims **characterised in that** the switching valve (31) has a slide (32) which is acted upon with a spring force and which is sealed off to be oil leakagefree.

7. A combine harvester according to claim 6 **characterised in that** different opening pressures can be set in dependence on the spring force and the configuration of the valve seat (35) and the ring surface (36).

8. A combine harvester according to one of the preceding claims **characterised in that** the at least one hydraulic cylinder (21) for adjusting and holding the set position of the threshing concave adjustment device (23) is displaceable by actuation of a 3/2 way valve (41) and a 2/2 way valve (43).

9. A combine harvester according to one of the preceding claims **characterised in that** the switching valve (31) enables an overload protection when hydraulic pressure (P) is applied.

10. A combine harvester according to one of the preceding claims **characterised in that** the at least one hydraulic cylinder (21) can be acted upon at the piston side with a hydraulic pressure (P) provided by a hydraulic pump of the hydraulic operating system.

## Revendications

1. Moissonneuse-batteuse comprenant un dispositif de battage (2), incluant au moins un batteur (3, 12) ainsi qu'un contre-batteur (6, 14) qui entoure celui-ci par endroits et qui est conçu de façon que le contre-batteur (6, 14) soit positionné avec une possibilité de modifier l'écart par rapport à la surface latérale (4, 13) du batteur (3, 12) au moyen d'un dispositif de réglage de contre-batteur à actionnement hydraulique (23), ainsi que comprenant une hydraulique de travail pour opérer le dispositif de battage (2),
- le dispositif de réglage de contre-batteur (23) étant agencé de façon que le dispositif de réglage de contre-batteur (23) soit actionné au moyen d'au moins un vérin hydraulique à double effet (21), et
- le au moins un vérin hydraulique (21) étant conçu de façon que le vérin hydraulique (21) soit sollicité avec une pression hydraulique (P, P2) côté piston ainsi que côté tige pour régler un écart du contre-batteur (6, 14) à la surface latérale (4, 13) du batteur (3, 12),
**caractérisée en ce que** la mise hors service de l'hydraulique de travail a pour effet de commander une valve de commande (31) de façon qu'une pression minimale (P2) reste présente pour maintenir le au moins un vérin hydraulique (21) dans sa position réglée en dernier.

2. Moissonneuse-batteuse selon la revendication 1, **caractérisée en ce que** l'hydraulique de travail est conformée en système à pression constante.

3. Moissonneuse-batteuse selon la revendication 1, **caractérisée en ce que** la valve de commande (31) est conformée en valve à siège à 2/2 voies.

4. Moissonneuse-batteuse selon une des revendications 1 à 3, **caractérisée en ce que** la valve de commande (31) comporte un premier raccord de commande (45) et un second raccord de commande (46), par l'intermédiaire desquels la valve de commande (31) est commandable afin de s'ouvrir indépendamment du raccord de commande (45, 46) qui est commandé.

5. Moissonneuse-batteuse selon la revendication 4, **caractérisée en ce que** la valve de commande (31) est commandable hydrauliquement.

6. Moissonneuse-batteuse selon une des revendications précédentes, **caractérisée en ce que** la valve de commande (31) comporte un tiroir (32) qui peut être sollicité par une force élastique et qui est étanché de manière exempte de fuite d'huile.

7. Moissonneuse-batteuse selon la revendication 6, **caractérisée en ce que** des pressions d'ouverture différentes peuvent être réglées en fonction de la force élastique ainsi que de la configuration du siège de valve (35) et de la surface annulaire (36) .

8. Moissonneuse-batteuse selon une des revendications précédentes, **caractérisée en ce que** le au moins un vérin hydraulique (21) est déplaçable pour régler et pour maintenir la position réglée du dispositif de réglage de contre-batteur (23) par actionnement d'une valve à 3/2 voies (41) et d'une valve à 2/2 voies (43).

9. Moissonneuse-batteuse selon une des revendications précédentes, **caractérisée en ce que**, en présence d'une pression hydraulique (P), la valve de commande (31) libère une sécurité de surcharge.

10. Moissonneuse-batteuse selon une des revendications précédentes, **caractérisée en ce que** le au moins un vérin hydraulique (21) peut être sollicité côté piston avec une pression hydraulique (P) fournie par une pompe hydraulique de l'hydraulique de travail.
